# EUROPÄISCHE PATENTSCHRIFT

(11) **EP 1 704 018 B1**
(45) Veröffentlichungstag und Bekanntmachung des Hinweises auf die Patenterteilung: **30.01.2008**
(21) Anmeldenummer: 04819670.3
(22) Anmeldetag: 08.11.2004
(51) Int. Cl.: B23Q 11/00, B24B 55/10, B25F 5/00

(54) **ELEKTROHANDWERKZEUGMASCHINE MIT STAUBAUFFANGBEHÄLTER UND FÜLLSTANDSANZEIGE**
HAND-HELD ELECTRIC MACHINE TOOL COMPRISING A DUST COLLECTION CONTAINER AND A LEVEL INDICATOR
MACHINE-OUTIL ELECTRIQUE PORTATIVE AVEC BAC COLLECTEUR DE POUSSIERE ET INDICATEUR DE NIVEAU

(30) Priorität: 05.12.2003 DE 10356927
(43) Veröffentlichungstag der Anmeldung: 27.09.2006
(73) Patentinhaber: ROBERT BOSCH GMBH, 70442 Stuttgart (DE)
(72) Erfinder: WUENSCH, Steffen, 71088 Holzgerlingen (DE); HESSE, Juergen, 71111 Waldenbruch (DE)
(86) Internationale Anmeldenummer: PCT/EP2004/052841
(87) Internationale Veröffentlichungsnummer: WO 2005/053901

(56) Entgegenhaltungen:
- EP-A- 1 428 617
- WO-A-00/73016
- DE-A- 3 300 250

## Beschreibung

### Stand der Technik

Die Erfindung geht aus von einer Elektrohandwerkzeugmaschine nach dem Oberbegriff des Anspruchs 1.

Insbesondere bei Elektrohandschleifmaschinen, wie Exzenter-, Schwing- oder Bandschleifer, werden zum Auffangen des Schleifstaubs Stoffsäcke, Papiersäcke oder Boxen verwendet, die mittels eines abstehenden Einlassstutzens auf einen am Maschinengehäuse ausgebildeten Staubauswurfstutzen, der eine im Maschinengehäuse vorhandene Staubauswurföffnung umschließt, aufgeschoben werden. Während die Papiersäcke und Stoffbeutel als Wegwerfeinheiten konzipiert sind, die zusammen mit dem aufgefangenen Staub entsorgt werden, besitzen die Boxen eine Staubsammelkammer, die nach Öffnen der Box für den wiederholten Gebrauch des Staubauffangbehälters entleert werden kann. Der Einlassstutzen mündet in der Staubsammelkammer, und die Staubsammelkammer steht mit einer Abluftöffnung, der ein Staubfilter vorgeordnet ist, in Verbindung.

Durch den Schleifvorgang wird der Staubauffangbehälter zunehmend gefüllt. Dabei nimmt dessen Fassungsgrad ständig ab, und mit reduziertem Absauggrad wird immer mehr Staub an die Umgebung abgegeben, was zu einer zunehmenden Belastung des Bedienenden führt. Bei Bandschleifern tritt zusätzlich das Problem auf, dass wegen des hohen Abtrags der Staubauffangbehälter sehr schnell gefüllt wird und dadurch der Bedienende meist erst dann auf den übervollen Staubauffangbehälter aufmerksam wird, wenn der Staubauswurfstutzen und weitere Staubführungskanäle in der Maschine verstopft sind. Zwecks Reinigung ist dann eine Zerlegung der Maschine erforderlich.

Eine bekannte Elektrohandwerkzeugmaschine (WO 00/73016 A1) weist ein Maschinengehäuse mit integrierter Staubabsaugung und mit einem der Staubabsaugung nachgeschalteten Ausblas- oder Staubauswurfstutzen auf. An den Ausblasstutzen ist lösbar eine staubdichte Staubauffangbox befestigt. Mehrere Seitenwände der Staubauffangbox weisen Luftaustrittsöffnungen auf und tragen die Luftaustrittsöffnungen überdeckende, staubdichte Filterelemente. Die Staubauffangbox ist in einer ihrer Seitenwände zumindest bereichsweise durchsichtig ausgebildet, so dass von dem Bedienenden der Füllstand der Staubauffangbox quasi wie mit einem Sichtfenster optisch überwacht werden kann.

Eine als Elektrohobel konzipierte bekannte Elektrohandwerkzeugmaschine (EP 1 428 617 A1) weist ein Maschinengehäuse und einen am Maschinengehäuse angeordneten Staubauswurfstutzen auf. Ein Staubauffangbehälter ist auf den Staubauswurfstutzen aufgesteckt. Der Staubauffangbehälter weist einen rohrförmigen Balg aus einem luftdurchlässigen Tuch auf, der endseitig mit je einer Kunststoffkappe abgeschlossen ist. An den beiden Kunststoffkappen stützt sich eine in den Balg eingelegte Druckfeder ab, die den Balg strafft. Die eine Kunststoffkappe ist mit einem Einlassstutzen versehen, der auf den Staubauswurfstutzen am Maschinengehäuse aufsteckbar ist. Die beiden Kunststoffkappen sind aus transparentem Material, so dass der Bediener in das Innere des Balgs blicken und die Staubfüllung des Belags beobachten kann.

Bei einer bekannten Füllstandsanzeige für den Füllgrad eines Staubsaugerfilterbeutels (DE 33 00 250 A1) wird durch die vor und hinter dem Filterbeutel herrschende Druckdifferenz ein sichtbar angeordnetes Anzeigelement proportional zur Druckdifferenz gegen eine Rückstellkraft verstellt und in der jeweils erreichten Stellung festgehalten. Hierzu sind am Gehäuse des Staubsaugers zwei Anschlussstutzen angeformt, von denen ein Anschlussstutzen mit dem Druckraum hinter dem Filterbeutel und ein Anschlussstutzen mit dem Druckraum vor dem Filterbeutel verbunden ist. Die Anschlussstutzen münden auf verschiedenen Seiten einer Membran, mit der ein scheibenförmiges Anzeigeelement über einen Achsstift gekoppelt ist. An der Oberseite des Gehäuses ist ein Sichtfenster angebracht, durch das hindurch das Anzeigelement beobachtet werden kann. Je nach Druckdifferenz wird die Membran mehr oder weniger ausgebogen und entsprechend das Anzeigelement im Sichtfenster verschoben.

### Vorteile der Erfindung

Die erfindungsgemäße Elektrohandwerkzeugmaschine mit den Merkmalen des Anspruchs 1 hat den Vorteil, dass durch die Füllstandsanzeige der Bedienende rechtzeitige auf die erforderliche Entleerung des Staubauffangbehälters aufmerksam gemacht wird und so eine erhöhte Staubbelastung des Bedienenden und ein Verstopfen der Absaugkanäle im Geräteinnern vermieden wird. Durch die Messung des Drucks im Staubauswurfstutzen des Maschinengehäuses können Staubauffangbehälter mit unterschiedlicher Form und unterschiedlichem Fassungsvermögen angeschlossen werden, ohne dass die Füllstandsanzeige an den individuellen Staubauffangbehälter angepasst zu werden braucht. Damit kann die Füllstandsanzeige in unterschiedlichen Typen von Elektrohandwerkzeugmaschinen eingesetzt werden, wobei bei Elektrohandwerkzeugmaschinen mit eigenem Sauggebläse lediglich die Füllstandsanzeige auf den vom Sauggebläse im Staubauswurfstutzen erzeugten Ausblasdruck abgestimmt werden muss.

Durch die in den weiteren Ansprüchen aufgeführten Maßnahmen sind vorteilhafte Weiterbildungen und Verbesserungen der im Anspruch 1 angegebenen Elektrohandwerkzeugmaschine möglich.

Gemäß einer bevorzugten Ausführungsform der Erfindung ist der Drucksensor im Maschinengehäuse angeordnet und erfasst über einen im Maschinegehäuse verlegten Kanal der im Staubauswurfstutzen mündet, den Druck im Staubauswurfstutzen. Dies hat den Vorteil, dass der Drucksensor staubgeschützt untergebracht ist und nicht verschmutzen und damit ungenau werden kann.

Als Drucksensor können verschiedene im Handel erhältliche Sensortypen verwendet werden. Gemäß einer bevorzugten Ausführungsform der Erfindung wird ein elektromechanischer Drucksensor mit einer von einer Membran oder einem Verschiebekolben begrenzten Druckkammer eingesetzt, dessen Membran oder Verschiebekolben ein Kontaktelement eines Unterbrechungskontaktes trägt. Die Druckkammer ist von dem Druck im Staubauswurfstutzen beaufschlagt und der Unterbrechungskontakt im Stromkreis einer elektrischen Anzeige angeordnet. Nach einem vorgegebenen Hub der Membran schließt der Unterbrechungskontakt, die Anzeige leuchtet auf und signalisiert den maximalen Füllgrad des Staubauffangbehälters.

### Zeichnung

Die Erfindung ist anhand eines in der Zeichnung dargestellten Ausführungsbeispiels in der nachfolgenden Beschreibung näher erläutert. Es zeigen:
- Fig. 1: einen schematisierten Halb-Längsschnitt eines Exzenterschleifers mit Staubauffangbehälter und Füllstandsanzeige für den Staubauffangbehälter,
- Fig. 2: eine perspektivische Ansicht eine elektromechanischen Drucksensors in der Füllstandsanzeige gemäß Fig. 1,
- Fig. 3: einen schematisierten Längsschnitt des Drucksensors in Fig. 2,
- Fig. 4: eine schematisierte Seitenansicht eines mechanischen Drucksensors zum Einsatz in der Füllstandsanzeige gemäß Fig. 1, teilweise geschnitten.

### Beschreibung des Ausführungsbeispiels

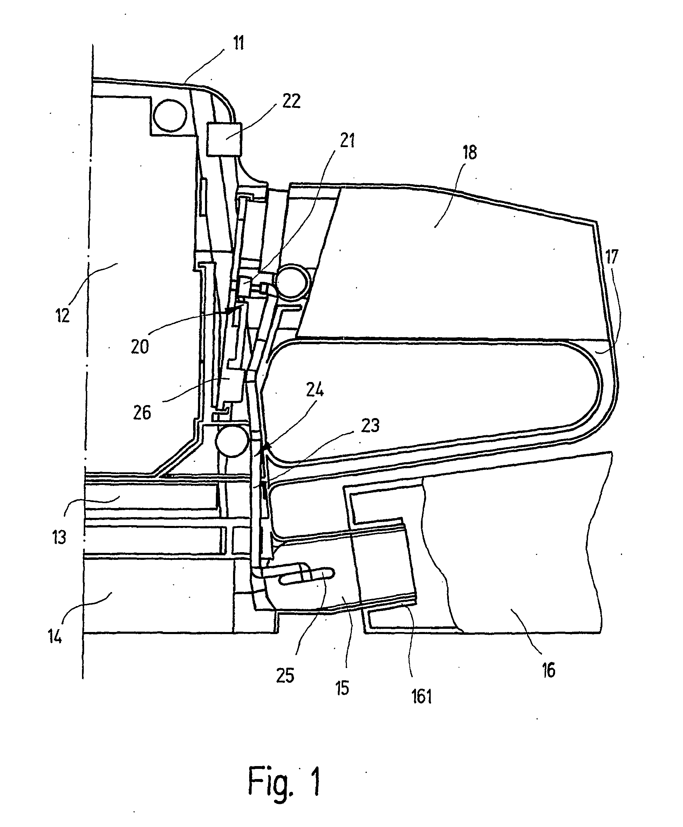

Der in Fig. 1 schematisch im Halb-Längsschnitt dargestellte Exzenterschleifer als Ausführungsbeispiel für eine Elektrohandwerkzeugmaschine weist ein Gehäuse 11 auf, in dem ein Elektromotor 12 aufgenommen ist, dessen Abtriebswelle über ein Exzentergetriebe einen hier nicht dargestellten Schleifteller antreibt. Auf der Antriebswelle sitzt einerseits ein Lüfter 13 zur Belüftung des Elektromotors 12 und andererseits ein Lüfterrad 14 eines Sauggebläses, das beim Schleifvorgang auf der Oberfläche eines Werkstücks anfallenden Staub durch den Schleifteller hindurch ansaugt und über ein am Maschinengehäuse 11 ausgebildeten Staubauswurfstutzen 15 ausbläst. An dem Staubauswurfstutzen 15 ist ein Staubauffangbehälter 16 angeschlossen, der als Stoff- oder Papierbeutel oder als Box mit abnehmbarem Deckel ausgebildet sein kann. Der Staubauffangbehälter 16 ist mit einem Führungsstutzen 161 auf den Staubauswurfstutzen 15 aufgeschoben und kann zum Entsorgen des aufgefangenen Staubs vom Staubauswurfstutzen 15 abgezogen werden. Der Staubauswurfstutzen 15 liegt unterhalb eines am Maschinegehäuse 11 angeformten, bügelartigen Handgriffs 17. Im Handgriff 17 ist eine Drucktaste 18 zum Ein- und Ausschalten des Elektromotors 12 integriert, die bei abgeschaltetem Elektromotor 12 in den im Handgriff 17 ausgesparten Griffbereich hineinragt und mittels eines der Finger der den Handgriff 17 umschließenden Hand betätigt werden kann.

Um sicherzustellen, dass während des Schleifvorgangs der gefüllte Staubauffangbehälter 16 rechtzeitig vom Bedienenden geleert wird, um dadurch eine unnötig große Staubbelastung des Bedienenden und des Gerätes zu vermeiden, ist im Maschinengehäuse 11 eine Füllstandsanzeige 20 integriert, die die Füllmenge im Staubauffangbehälter 16 erfasst und mindestens dann, wenn die maximal zulässige Füllmenge erreicht ist, dem Bedienenden ein optisches oder akustisches Signal gibt, dass den Bedienenden auf die Notwendigkeit des Entleerens oder Wechseln des Staubauffangbehälters 16 hinweist. Die Füllstandsanzeige 20 umfasst einen den Druck im Staubauswurfstutzen 15 erfassenden Drucksensor 21, der eine dem Messdruck proportionale Ausgangsgröße erzeugt, und eine von der Ausgangsgröße des Drucksensors 21 gesteuerte Anzeigeeinheit 22. Die Druckerfassung im Staubauswurfstutzen 15 erfolgt über einen im Staubauswurfstutzen 15 mündenden Kanal 24, der im Maschinengehäuse 11 bis hin zum Drucksensor 21 verläuft und am Drucksensor 21 angeschlossen ist. Im Ausführungsbeispiel der Fig. 1 ist der Kanal 24 als elastischer Schlauch 23 ausgeführt, der im Maschinengehäuse 11 verlegt ist und mit seinem Ende in einem im Staubauswurfstutzen 15 mittig angeordneten Steg 25 befestigt ist.

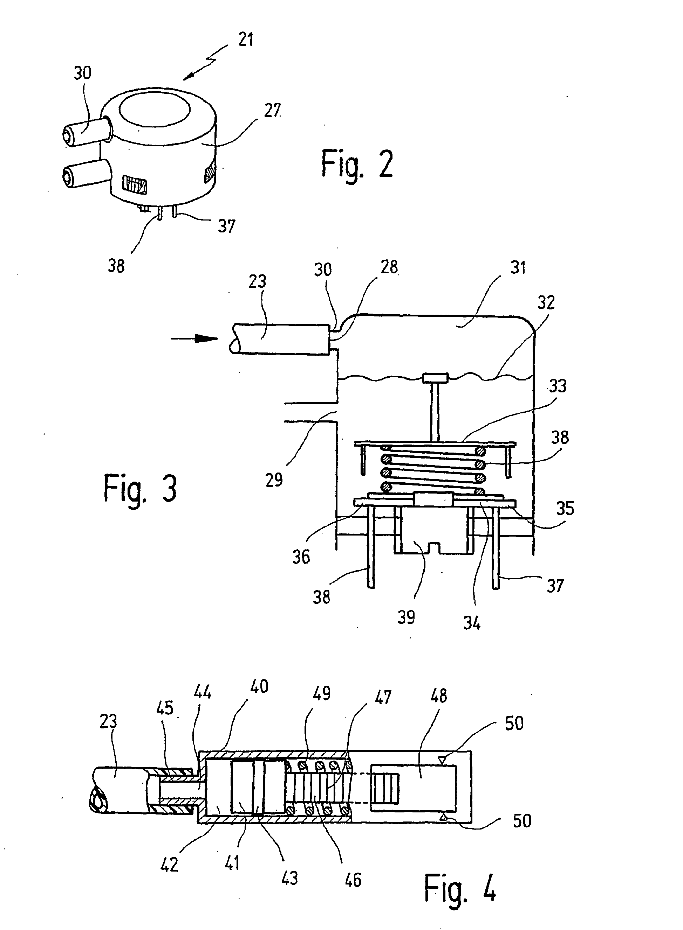

Im dargestellten Ausführungsbeispiel ist der Drucksensor 21 als elektromechanischer Drucksensor ausgeführt, der auf einer im Maschinengehäuse 11 festgelegten Platine 26 befestigt ist. Auf der Platine 26 sind noch weitere erforderliche Bauelemente der Füllstandsanzeige 20 untergebracht. Der elektromechanische Drucksensor 21, der als Kaufteil erhältlich ist, ist in Fig. 2 perspektivisch und in Fig. 3 zur Verdeutlichung seiner Funktionsweise im schematischen Längsschnitt dargestellt. Der Drucksensor 21 weist ein Gehäuse 27 auf, in dem zwei Gehäuseöffnungen 28, 29 ausgebildet sind. Mindestens die in Fig. 2 und 3 obere Gehäuseöffnung 28 ist von einem Anschlussstutzen 30 umschlossen, auf den der Schlauch 23 aufgeschoben ist. Im Gehäuse 27 ist eine Membran 32 angeordnet, die im Gehäuse 27 eine Druckkammer 31 begrenzt, in der die Gehäuseöffnung 28 liegt, während die Gehäuseöffnung 29 in dem auf der Rückseite der Membran 32 liegenden Bereich im Gehäuse 27 mündet. An der Membran 32 ist eine Kontaktbrücke 33 befestigt, die mit einem Kontaktträger 34 zusammenwirkt. Der Kontaktträger 34 trägt zwei Kontaktflächen 35, 36. Jede Kontaktfläche 35, 36 ist auf einen Anschlussstift 37, 38 kontaktiert, der auf der Unterseite des Gehäuses 27 herausgeführt ist. Die Kontaktbrücke 33 bildet mit den auf dem Kontaktträger 34 angeordneten Kontaktflächen 35, 36 einen elektrischen Unterbrechungskontakt, der im Stromkreis der elektrischen Anzeigeeinheit 22 (Fig. 1) angeordnet ist. Setzt die Kontaktbrücke 33 auf den Kontaktflächen 35, 36 auf, so ist der Unterbrechungskontakt geschlossen und die Anzeigeeinheit 22 leuchtet auf. Zwischen der Kontaktbrücke 33 und dem Kontaktträger 34 ist eine Druckfeder 38 angeordnet, deren axiale Vorspannung durch eine Justierschraube 39 einstellbar ist, um den Hub der Kontaktbrücke 33 an den im Staubauswurfstutzen 15 herrschenden Druck anzupassen.

### Die Funktionsweise des elektromechanischen Drucksensors 21 ist wie folgt:

Der im Staubauswurfstutzen 15 von dem Lüfterrad 14 erzeugte Gebläsedruck steht über den Schlauch 23 in der Druckkammer 31 des Drucksensors 21 an. Mit zunehmender Befüllung des Staubauffangbehälters 16 wächst der Druck im Staubauswurfstutzen 15 an. Die Membran 32 wölbt sich in Fig. 3 nach unten aus und verschiebt die Kontaktbrücke 33 gegen die Rückstellkraft der Druckfeder 38 in Richtung Kontaktträger 34. Die Druckfeder 38 ist so eingestellt, dass durch den Druck im Staubauswurfstutzen 15, der bei maximal befülltem Staubauffangbehälter 16 auftritt, die Membran 32 die Kontaktbrücke 33 soweit verschiebt, dass die Kontaktbrücke 33 auf den Kontaktflächen 35, 36 aufsetzt und den Unterbrechungskontakt schließt. Dadurch leuchtet die Anzeigeeinheit 22, die im Maschinengehäuse 11 oberhalb des Handgriffs 17 für den Bedienenden sichtbar angeordnet ist, auf und signalisiert dem Bedienenden den vollen Staubauffangbehälter 16.

Anstelle der Membran 32 kann im Gehäuse 27 des Drucksensors 21 auch ein Verschiebekolben angeordnet sein, der mit seiner Stirnseite die Druckkammer 31 begrenzt. Die Gehäuseöffnung 29 in dem von der Rückseite des Verschiebekolbens begrenzten Gehäusebereichs ist dann so angeordnet, dass sie in keiner Verschiebestellung des Verschiebekolbens von letzterem geschlossen werden kann.

Bei dem in Fig. 4 dargestellten Ausführungsbeispiel des Drucksensors 21 handelt es sich um einen mechanischen Drucksensor, der anstelle des elektromechanischen Drucksensors 21 verwendet werden kann. Auch dieser mechanische Drucksensor ist als Kaufteil im Handel erhältlich. Er weist ein Gehäuse 40 auf, in dem ein Verschiebekolben 41 axial verschieblich geführt ist. Der Verschiebekolben 41 begrenzt mit seiner einen Stirnseite eine Druckkammer 42 und ist gegenüber der Gehäuseinnenwand mittels eines Dichtungsrings 43 abgedichtet. Im Bereich der Druckkammer 42 weist das Gehäuse 40 eine Öffnung 44 auf, die von einem Anschlussstutzen 45 umschlossen ist. Auf den Anschlussstutzen 45 ist der in den Staubauswurfstutzen 15 führende Schlauch 23 aufgesteckt, so dass die Druckkammer 42 mit dem im Staubauswurfstutzen 15 herrschenden Druck beaufschlagt ist. An der von der Druckkammer 42 abgekehrten Rückseite des Verschiebekolbens 41 ist eine Anzeigeleiste 46 befestigt. Die Anzeigeleiste 46 trägt eine Skalierung 47 und ist in einem im Gehäuse 40 ausgesparten Fenster 48 sichtbar. Mit zunehmendem Druck in der Druckkammer 42 wird der Verschiebekolben 41 gegen die Rückstellkraft der Druckfeder 49 zunehmend nach in Fig. 4 rechts verschoben und ein zunehmender Teil der Anzeigeleiste 46 wird im Fenster 48 sichtbar. Bei maximalem Druck in der Druckkammer 42, der dem bei maximal gefülltem Auffangbehälter 16 im Staubauswurfstutzen 15 auftretenden Druck entspricht, hat die Anzeigeleiste 46 Markierungen 50 erreicht, die dem Bedienenden die dringende Notwendigkeit der Entleerung des Staubauffangbehälters 16 signalisieren.

Als Drucksensor 21 in der Füllstandsanzeige 20 kann auch eine piezoelektrische Druckmesszelle verwendet werden, bei welcher der im Staubauswurfstutzen 15 herrschende Druck in einer Piezokeramik eine dem Druck proportionale elektrische Signalspannung erzeugt, die zur Steuerung der Anzeigeeinheit 22 herangezogen werden kann.

## Patentansprüche

1. Elektrohandwerkzeugmaschine mit einem Maschinengehäuse (11) und daran ausgebildetem Staubauswurfstutzen (15), mit einem an dem Staubauswurfstutzen (15) angeschlossenen Staubauffangbehälter (16) und mit einer die Staubbeladung des Staubauffangbehälters (16) ausweisenden Füllstandsanzeige (20), **dadurch gekennzeichnet, dass** die Füllstandsanzeige (20) im Maschinengehäuse (11) integriert ist und einen den Druck im Staubauswurfstutzen (15) messenden Drucksensor (21) und eine Anzeigeeinheit (22) aufweist, die von einer vom Drucksensor (21) erzeugten, dem gemessenen Druck proportionalen Ausgangsgröße gesteuert ist.

2. Elektrohandwerkzeugmaschine nach Anspruch 1, **dadurch gekennzeichnet, dass** der Drucksensor (21) im Maschinengehäuse (11) angeordnet ist und über einen im Maschinengehäuse (11) verlegten, im Staubauswurfstutzen (15) mündenden Kanal (24) den Druck im Staubauswurfstutzen (15) erfasst.

3. Elektrohandwerkzeugmaschine nach Anspruch 1 oder 2, **dadurch gekennzeichnet, dass** die Anzeigeeinheit (22) am Maschinengehäuse (11),
vorzugsweise oberhalb eines am Maschinengehäuse (11) angeformten Handgriffs (17), sichtbar ist.

4. Elektrohandwerkzeugmaschine nach einem der Ansprüche 1 bis 3, **dadurch gekennzeichnet, dass** der Drucksensor (21) ein elektromechanischer Drucksensor ist, bei dem eine von einer Membran (32) oder einem Verschiebekolben (41) begrenzte Druckkammer (42) mit dem im Staubauswurfstutzen (15) herrschenden Druck beaufschlagt und mittels einer Feder (38) gegen den Druck in der Druckkammer (42) vorgespannt ist, und an der Membran (32) oder am Verschiebekolben (41) ein Kontaktglied eines im Stromkreis einer elektrischen Anzeigeeinheit (22) angeordneten Unterbrechungskontakts angekoppelt ist, der nach einem vorgegebenen Hub der Membran (32) oder des Verschiebekolbens (41) schließt.

5. Elektrohandwerkzeugmaschine nach Anspruch 4, **dadurch gekennzeichnet, dass** der maximale Hub der Membran (32) oder des Verschiebekolbens (41) so eingestellt ist, dass bei einem Druck in der Druckkammer (42) der dem bei maximal gefülltem Staubauffangbehälter (16) im Staubauswurfstutzen (15) herrschenden Druck entspricht, der Unterbrechungskontakt schließt.

6. Elektrohandwerkzeugmaschine nach einem der Ansprüche 1 bis 3, **dadurch gekennzeichnet, dass** der Drucksensor (21) ein mechanischer Drucksensor mit einem vom Druck in dem Staubauswurfstutzen (15) beaufschlagten Verschiebekolben (41) und die Anzeigeeinheit (22) eine den Verschiebeweg des Verschiebekolbens (41) als Füllstandsmenge des Staubauffangbehälters (16) darstellende Anzeigevorrichtung ist.

7. Elektrohandwerkzeugmaschine nach einem der Ansprüche 1 bis 3, **dadurch gekennzeichnet, dass** der Drucksensor (21) eine piezoelektrische Druckmesszelle ist.

8. Elektrohandwerkzeugmaschine nach einem der Ansprüche 1 bis 7, **dadurch gekennzeichnet, dass** im Maschinengehäuse (11) ein Lüfterrad (14) eines Sauggebläses angeordnet ist, das Staub von der Oberfläche eines bearbeiteten Werkstücks absaugt und über den Staubauswurfstutzen (15) in den Staubauffangbehälter (16) einbläst.

## Claims

1. Portable electric power tool comprising a machine housing (11) and a dust discharge connection piece (15) formed thereon, comprising a dust collection container (16) attached to the dust discharge connection piece (15), and comprising a level indicator (20) showing the dust load of the dust collection container (16), **characterized in that** the level indicator (20) is integrated in the machine housing (11) and has a pressure sensor (21), measuring the pressure in the dust discharge connection piece (15), and an indicating unit (22) which is controlled by an output variable produced by the pressure sensor (21) and proportional to the measured pressure.

2. Portable electric power tool according to Claim 1, **characterized in that** the pressure sensor (21) is arranged in the machine housing (11) and records the pressure in the dust discharge connection piece (15) via a passage (24) laid in the machine housing (11) and opening out in the dust discharge connection piece (15).

3. Portable electric power tool according to Claim 1 or 2, **characterized in that** the indicating unit (22) is visible on the machine housing (11), preferably above a handle (17) integrally formed on the machine housing (11).

4. Portable electric power tool according to one of Claims 1 to 3, **characterized in that** the pressure sensor (21) is an electromechanical pressure sensor in which a pressure chamber (42) defined by a diaphragm (32) or a displacement piston (41) is acted upon by the pressure prevailing in the dust discharge connection piece (15) and is preloaded by means of a spring (38) against the pressure in the pressure chamber (42), and a contact member of an interruption contact arranged in the electric circuit of an electric indicating unit (22) is coupled to the diaphragm (32) or the displacement piston (41), said interruption contact closing after a predetermined stroke of the diaphragm (32) or the displacement piston (41).

5. Portable electric power tool according to Claim 4, **characterized in that** the maximum stroke of the diaphragm (32) or of the displacement piston (41) is set in such a way that the interruption contact closes at a pressure in the pressure chamber (42) which corresponds to the pressure prevailing in the dust discharge connection piece (15) when the dust collection container (16) is filled to the maximum level.

6. Portable electric power tool according to one of Claims 1 to 3, **characterized in that** the pressure sensor (21) is a mechanical pressure sensor having a displacement piston (41) acted upon by the pressure in the dust discharge connection piece (15), and the indicating unit (22) is an indicating device showing the displacement travel of the displacement piston (41) as a level quantity of the dust collection container (16).

7. Portable electric power tool according to one of Claims 1 to 3, **characterized in that** the pressure sensor (21) is a piezoelectric pressure-measuring cell.

8. Portable electric power tool according to one of Claims 1 to 7, **characterized in that** a fan impeller (14) of an extractor is arranged in the machine housing (11), said fan impeller (14) drawing in dust from the surface of a processed workpiece and blowing it into the dust collection container (16) via the dust discharge connection piece (15).

## Revendications

1. Machine-outil électrique portative comportant un boîtier de machine (11) muni d'un embout d'éjection de poussières (15), un réceptacle à poussières (16) relié à l'embout de sortie de poussières (15) ainsi qu'un indicateur de niveau de remplissage (20) donnant la charge de poussières du réceptacle à poussières (16),
**caractérisée en ce que**
l'afficheur de niveau de remplissage (20) est intégré au boîtier (11) de la machine et comporte un capteur de pression (21) mesurant la pression dans l'embout d'éjection de poussières (15) ainsi qu'une unité d'affichage (22) commandée par une grandeur de sortie, proportionnelle à la pression mesurée, grandeur générée par le capteur de pression (21).

2. Machine-outil électrique portative selon la revendication 1,
**caractérisée en ce que**
le capteur de pression (21) logé dans le boîtier (11) de la machine détecte la pression dans l'embout d'éjection de poussières (15) par un canal (24) dans le boîtier (11) de la machine débouchant dans l'embout d'éjection de poussières (15).

3. Machine-outil électrique portative selon la revendication 1 ou 2,
**caractérisée en ce que**
l'unité d'affichage (22) est prévue de manière visible sur le boîtier (11) de la machine, de préférence au-dessus d'une poignée (17) formée sur le boîtier (11) de la machine.

4. Machine-outil électrique portative selon l'une des revendications 1 à 3,
**caractérisée en ce que**
le capteur de pression (21) est un capteur de pression électromécanique sollicité par la pression régnant dans l'embout d'éjection de poussières (15) dans une chambre de pression (42) délimitée par une membrane (32) ou un piston coulissant (41), en étant précontraint par un ressort (38) contre la pression régnant dans la chambre de pression (42), et un élément de contact d'un contact d'interruption d'un circuit électrique d'une unité d'affichage électrique (22) est prévu sur la membrane (32) ou le piston coulissant (41), ce contact d'interrupteur se fermant pour une course prédéfinie de la membrane (32) ou du piston coulissant (41).

5. Machine-outil électrique portative selon la revendication 4,
**caractérisée en ce que**
la course maximale de la membrane (32) ou du piston coulissant (41) est réglée pour que le contact d'interrupteur se ferme à une pression régnant dans la chambre de pression (42) qui correspond à la pression régnant dans l'embout d'éjection de pression (15) lorsque le réceptacle à poussières (16) est rempli au maximum.

6. Machine-outil électrique portative selon l'une des revendications 1 à 3,
**caractérisée en ce que**
le capteur de pression (21) est un capteur de pression mécanique avec un piston coulissant (41) recevant la pression régnant dans l'embout d'éjection de poussières (15) et l'unité d'affichage (22) est un dispositif d'affichage représentant la course de coulissement du piston coulissant (41) comme grandeur correspondant au niveau de remplissage du réceptacle à poussières (16).

7. Machine-outil électrique portative selon l'une des revendications 1 à 3,
**caractérisée en ce que**
le capteur de pression (21) est une cellule de mesure de pression piézo-électrique.

8. Machine-outil électrique portative selon l'une des revendications 1 à 7,
**caractérisée en ce que**
le boîtier (11) de la machine comporte un rotor de ventilateur (14) d'une soufflante d'aspiration, qui aspire la poussière de la surface d'une pièce travaillée et souffle par l'intermédiaire de l'ajutage d'éjection de poussières (15) dans le réceptacle à poussière (16).
